# EUROPEAN PATENT APPLICATION

(11) **EP 1 640 218 A1**
(43) Date of publication of application: **29.03.2006**
(21) Application number: 05020765.3
(22) Date of filing: 23.09.2005
(51) Int. Cl.: B60R 21/01, G01G 19/414, B60N 2/00

(54) **Connecting structure for connecting a load measurement device and a load input portion**

(30) Priority: 28.09.2004 JP 2004281907
(71) Applicant: AISIN SEIKI KABUSHIKI KAISHA, Kariya-shi, Aichi-ken 448-8650 (JP)
(72) Inventor: Maeda, Toshiro, c/o Aisin Seiki Kabushiki Kaisha, Kariya-shi, Aichi-ken 448-8650 (JP); Okada, Takashi, Kariya, Aichi, 448-8605 (JP)
(74) Representative: Pautex Schneider, Nicole Véronique

(57) **Abstract**

A connecting structure for connecting a load measurement device and a load input portion (16) includes, an oscillating portion (50) provided at the load measurement device and oscillated upon receipt of a load from an object to be measured, the oscillating portion being applied with the load from the load input portion, a hole portion (30) provided at one of the oscillating portion and the load input portion, a shaft portion (20) provided at the other of the oscillating portion and the load input portion to be rotatably inserted into the hole portion, and a convex surface (20a) formed on at least one of an outer surface of the shaft portion and an inner surface of the hole portion to form a universal joint structure between the oscillating portion and the load input portion.

## Description

### FIELD OF THE INVENTION

This invention relates to a connecting structure for connecting a load measurement device and a load input portion used in a vehicle seat or the like.

### BACKGROUND

Conventionally, a seat belt holding mechanism, an air back operating mechanism, or the like are appropriately controlled by measuring a load from an occupant when the occupant sits on a vehicle seat of an automobile or the like. The aforementioned load measurement is performed by a load measurement device such as a load sensor assembled to a seat.

A known seat load detecting device using a conventional load measurement device is described in JP2004117199A which measures the load received from the seat as a relative displacement of a hall element and a magnet.

With the configuration of the seat load detecting device described in JP2004117199A, load input portions are provided on four corners of the seat and a load detecting portion is provided on the center of the seat. When the four load input portions are applied with the load by seating of the occupant, each load is gathered at the load detecting portion provided on the center of the seat and the seat load is measured by a displacement sensor which includes a hall element and a magnetic field forming element disposed to face each other in the load detecting portion.

A known load measurement device as typified by JP2004117199A is assembled to the seat on the assumption that a direction of the load applied from a seat bracket serving as the load input portion to the load sensor serving as the load measurement device is substantially vertical or slightly inclined forward or rearward in a longitudinal direction of a vehicle. However, in practice, when the occupant sat on the seat is swung about from side to side because of, for example, a sharp turn of the vehicle or the occupant shifts one's weight by moving a body, the load sensor is applied with the load in a deviated direction from the aforementioned direction, for example, in a width direction of a vehicle. In consequence, a moment in the width direction of the vehicle is generated and the moment causes a fluctuation and an error of the load measurement.

A need thus exists for a connecting structure for connecting the load measurement device and the load input portion which is capable of performing an accurate load measurement even when the moment in the width direction of the vehicle is generated in a condition where the direction of the load applied from the load input portion being deviated from a predetermined direction. Further, the present invention has been made in view of simplifying the structure of the measurement device and the load input portion and manufacturing the structure at a low cost.

### SUMMARY OF THE INVENTION

According to an aspect of the present invention, a connecting structure for connecting a load measurement device and a load input portion includes an oscillating portion provided at the load measurement device and oscillated upon receipt of a load from an object to be measured, the oscillating portion being applied with the load from the load input portion, a hole portion provided at one of the oscillating portion and the load input portion, a shaft portion provided at the other of the oscillating portion and the load input portion to be rotatably inserted into the hole portion, and a convex surface formed on at least one of an outer surface of the shaft portion and an inner surface of the hole portion to form a universal joint structure between the oscillating portion and the load input portion.

According to the connecting structure for connecting the load measurement device and the load input portion of the present invention, the oscillating portion of the load measurement device can be oscillated in the longitudinal and in the width direction of the vehicle by constructing the universal joint by forming the convex surface at at least one of the outer surface of the shaft portion or the inner surface of the hole portion. Therefore, the moment is not transmitted to the oscillating portion even when the load input portion is applied with the moment around the axis extended in the longitudinal and in the width direction of the vehicle because of, for example, the sharp turn of the vehicle or the weight shift of the occupant. Thus, the accurate measurement of the load can be performed.

### BRIEF DESCRIPTION OF THE DRAWINGS

The foregoing and additional features and characteristics of the present invention will become more apparent from the following detailed description considered with reference to the accompanying drawings, wherein:

Fig. 1 is a schematic view illustrating a connecting structure for connecting a load measurement device and a load input portion according to an embodiment of the present invention.

Fig. 2 is an exploded perspective view of the load measurement device.

Fig. 3 is a cross-sectional view illustrating a connecting structure for connecting an oscillating portion and a bracket.

Fig. 4A is a cross-sectional view illustrating the connecting structure for connecting the oscillating portion and the bracket in a condition where the bracket is moved in parallel upon receipt of a moment in a width direction of a vehicle.

Fig. 4B is a cross-sectional view illustrating the connecting structure for connecting the oscillating portion and the bracket in a condition where the bracket is moved in an oblique direction upon receipt of the moment in the width direction of the vehicle.

Fig. 5 is a view illustrating an example of an optimal arrangement of the connecting structure for connecting the load measurement device and the bracket.

### DETAILED DESCRIPTION

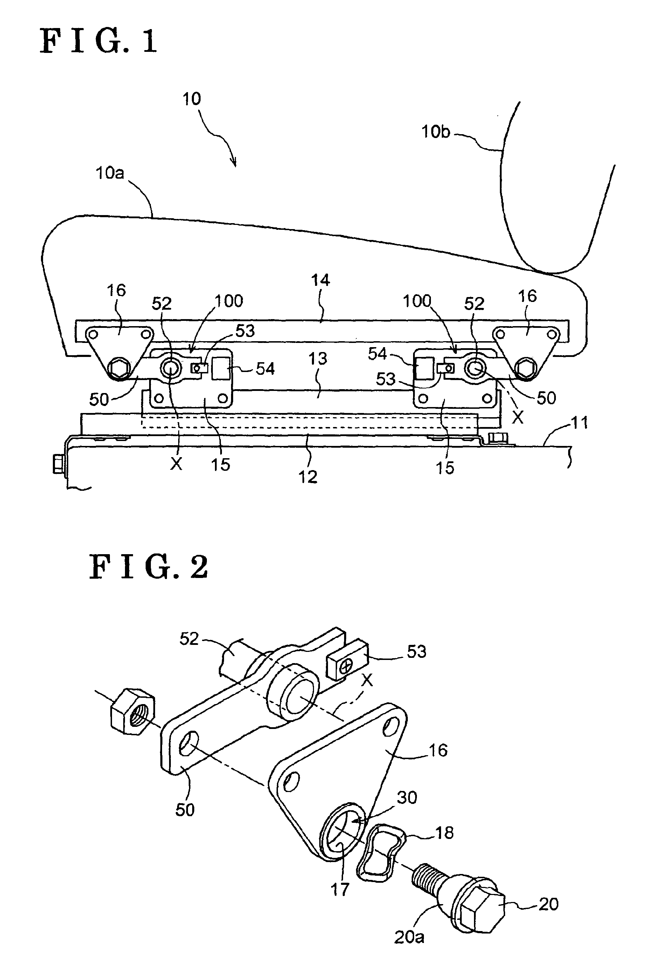

An embodiment of the present invention will be explained with reference to illustrations of drawing figures as follows. According to the embodiment of the present invention, connecting structures for connecting a load measurement device 100 and a load input portion 16 are provided at four corners of a vehicle seat 10 (shown in Fig.1 viewed from one side). The load measurement device 100 is assembled to the vehicle seat 10 as shown in Fig. 1.

The seat 10, which is assembled to a seat rail 12 fixed to a vehicle floor 11, includes a seat cushion 10a serving as a seating portion and a seatback 10b. The seat rail 12 is slidably engaged with an upper frame 13 provided to the seat 10 side. The load measurement device 100 is assembled between a seat setting portion 15 and a bracket 16. The seat setting portion 15 is provided at the upper frame 13 and the bracket 16 serves as a load input portion upon receipt of the load applied through a cushion frame 14.

An assembling structure of the load measurement device 100 is described in detail with reference to Fig. 2 as follows. The load measurement device 100 includes an oscillating portion 50 which is oscillated upon receipt of the load of an occupant as a measurement object. The bracket 16 is rotatably connected to a first side portion of the oscillating portion 50 and a magnet 53 used in a detection of a torsional displacement is provided on a second side portion of the oscillating portion 50. A torsion bar 52 is provided between the connecting portion of the bracket 16 and the magnet 53. The torsion bar 52 includes a torsion axis X and connects the oscillating portion 50 to the seat setting portion 15 in a width direction of the vehicle.

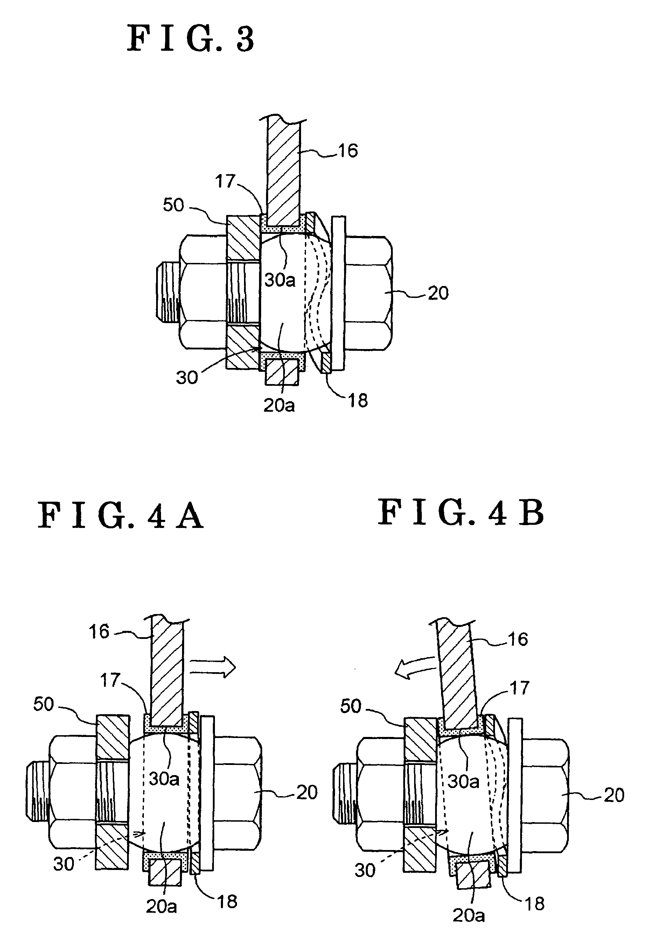

The connecting structure for connecting the oscillating portion 50 and the bracket 16 is described with reference to Fig. 3. According to the embodiment the present invention, the oscillating portion 50 includes a bolt 20 serving as the shaft portion and the bracket 16 includes a hole portion 30 as shown in Fig. 3. In such a condition, a convex surface 20a is formed on a part of an outer surface of the bolt 20. The convex surface 20a is formed so as to make the oscillating portion 50 be freely oscillated by contacting an outer surface of the bolt 20 coupled with the oscillating portion 50 with an inner surface 30a of the hole portion 30. The convex surface 20a preferably has a hemispherical curved surface.

In order to improve a slip of a contacting position between the convex surface 20a of the bolt 20 and the inner surface 30a of the hole portion 30, a coating layer 17 made of Teflon resins or the like is preferably provided on one of the bracket 16 or the bolt 20 or both of the bracket 16 and the bolt 20. For example, the coating layer 17 is provided to coat the inner surface 30a of the hole portion 30 of the bracket 16 according to the embodiment shown in Fig. 3. Thus, in practice, the convex surface 20a of the bolt 20 and the coating layer 17 which coats the inner surface 30a of the hole portion 30 are contacted. However, the structure of the present invention is explained on the supposition that the convex surface 20a of the bolt 20 and the inner surface 30a of the hole portion 30 being contacted for explanatory purpose.

Contact between the convex surface 20a of the bolt 20 and the inner surface 30a of the hole portion 30 can be a linear contact extended all circumferences of the bolt 20 or a point contact of more than one points. A universal joint can be configured by the linear contact or the point contact of the convex surface 20a of the bolt 20 and the inner surface 30a of the hole portion 30. The universal joint allows an oscillation of the oscillating portion 50 in both the longitudinal and the width direction of the vehicle when the load is applied from the bracket 16 to the load measurement device 100 in various directions.

More particularly, when the moment in the width direction of the vehicle is applied to the bracket 16 in a direction of an arrow shown in Fig. 4A, the inner surface 30a of the hole portion 30 of the bracket 16 is moved in parallel as shown in Fig. 4A while keep contacting relative to the convex surface 20a of the bolt 20. On the other hand, when the moment in the width direction of the vehicle is applied to the bracket 16 in a direction of an arrow shown in Fig. 4B, the inner surface 30a of the hole portion 30 of the bracket 16 is moved in an oblique direction as shown in Fig. 4B while keep contacting elative to the convex surface 20a of the bolt 20.

Accordingly, the moment is not transmitted to the oscillating portion 50 by operating a connecting structure for connecting the oscillating portion 50 and the bracket16 serving as the universal joint even when the load input portion is applied with the moment around the axis extended in the longitudinal and in the width direction of the vehicle because of, for example, a sharp turn of the vehicle or a weight shift of the occupant. On the other hand, contact between the inner surface 30a of the hole portion 30 of the bracket 16 and the convex surface 20a of the bolt 20 is kept. Therefore, the seat load is certainly transmitted to the oscillating portion 50 and an accurate measurement of the load can be performed.

According to the embodiment of the present invention, a position of the contacting point of the linear contact or the point contact between the convex surface 20a of the bolt 20 and the inner surface 30a of the hole portion 30 is kept substantially constant because the bracket 16 and the oscillating portion 50 are relatively operated centering around the contact point. Because the bolt 20 is coupled with the oscillating portion 50, a transmission path of the load from the bracket 16 to the oscillating portion 50 through in the vicinity of the most swelled portion of the convex surface 20a of the bolt 20 is substantially constant. Thus a stable load measurement can be performed. When the convex surface 20a is formed on the outer surface of the bolt 20 in place of on the inner surface 30a of the hole 30, the convex surface 20a is relatively easily manufactured and a manufacturing cost of the connecting structure for connecting the load measurement device and the load input portion can be reduced.

As shown in Figs. 2-4, it is effective to provide a spring washer 18 (i.e., biasing means) to the bolt 20 for applying a biasing force to the bracket 16 in a longitudinal direction of the bolt 20. The spring washer 18 prevents a fluctuation of clearance between the oscillating portion 50 of the load measurement device 100 and the bracket 16 by its biasing force and controls a gap between the oscillating portion 50 of the load measurement device 100 and the bracket 16. Thus the spring washer 18 is effective in reducing a shaking and an abnormal noise caused by the shaking. Further, the spring washer 18 is effective in keeping the bracket 16 in an appropriate position in a case of a sudden stop of the vehicle.

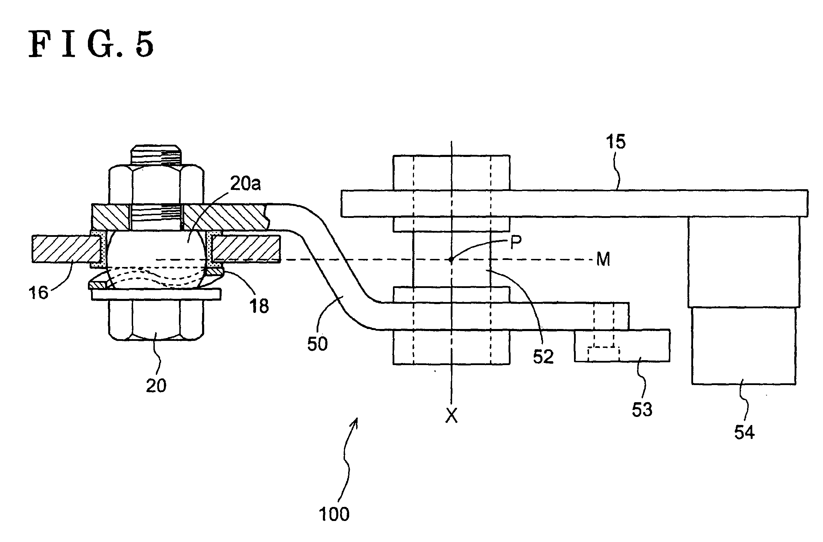

A further embodiment of the present invention is explained from the aspect of a relation between the oscillating portion 50 and the torsion bar 52. An example of an optimal arrangement of a load measurement device 100 and the bracket 16 is shown in Fig. 5. According to the embodiment shown in Fig. 5, the oscillating portion 50 is connected to the torsion bar 52. The oscillating portion 50 and the torsion bar 52 are arranged so that the convex surface 20a of the bolt 20 intersects with a hypothetical flat surface M. The hypothetical flat surface M includes an optimal position P for receiving the load out of positions placed along a longitudinal direction of the torsion bar 52 and being perpendicular to the torsion axis X of the torsion bar 52. According to the aforementioned arrangement, the oscillating portion 50 directly transmits the load to the torsion bar 52 without receiving a bending moment in the width direction of the vehicle when the load is applied from the bracket 16 to the oscillating portion 50. Thus, the load applied from the bracket 16 can appropriately be acted on the torsion bar 52. In such a condition, an ideal torsional displacement is generated in the torsion bar 52 and the accurate measurement of the load can be performed.

It is desirable that the flat surface M intersects with the convex surface 20a at a most swelled portion of the convex surface 20a. For this purpose, a thickness of the bracket 16 should be equal to or more than a half width of the convex surface 20a for making the inner surface 30a of the hole portion 30 provided at the bracket 16 constantly be contacted to the most swelled portion of the convex surface of the bolt 20. With the aforementioned structure, the accurate measurement of the load can be sufficiently performed.

Principle of the load measurement by the load measurement device 100 is described as follows. When the load is applied from the bracket 16 to the oscillating portion 50 of the load measurement device 100, the torsion bar 52 is twisted and the torsional displacement is generated. In such circumstances, a modulus in torsion of the torsion bar 52 is suitably set in consideration of, for example, an accuracy of the measurement. The torsional displacement becomes a relative displacement between the magnet 53 and the hall element 54. The magnet 53 is provided on the second side portion of the oscillating portion 50 and the hall element 54 is disposed to face the magnet 53 and coupled with the seat setting portion 15 of the upper frame 13. The relative displacement of the magnet 53 and the hall element 54 is detected by the change of magnetic flux density from the magnet 53 which is measured by the hall element 54.

As shown in Fig. 5, it is desirable to arrange the magnet 53 and the hall element 54 facing each other back and forth in a longitudinal direction of the vehicle. With the aforementioned arrangement, a measurement error caused by the oscillation of the vehicle can be reduced. It is because an influence because of a displacement of the oscillating portion 50 in an out-of-plane direction of the oscillating surface is reduced in comparison with an arrangement of the magnet 53 and the hall element 54 being arranged in a line in a width direction of the vehicle. Thus, a distance between the magnet 53 and the hall element 54 is hardly changed even when the oscillating portion 50 of the load measurement device 100 is wobbled or oscillated in a width direction of the vehicle during the load measurement and the accurate measurement of the load can be thereby performed.

The load measurement device 100 of the present invention is not limited to a structure using the torsional displacement by the torsion bar 52 and variations and changes may be made by others. For example, the load measurement device 100 may be provided with a spring, which is compressed in proportion to the load, between the oscillating portion 50 of the load measurement device 100 and the seat setting portion 15 of the upper frame 13 for using a compression displacement of the spring.

The displacement detected by the magnet 53 and the hall element 54 may be transmitted, for example, to a calculating means such as a computer (not shown) as an electronic signal and the seat load is calculated by, for example, a conversion program of the displacement - the load stored in the calculating means.

According to the embodiment the present invention, the oscillating portion includes the bolt serving as the shaft portion and the bracket includes a hole. However, the bracket may include the shaft portion and the oscillating portion may include the hole portion.

The connecting structure for connecting the load measurement device and the load input portion can be used in a seat load measurement of the vehicle seat of an automobile or the like, a measurement of an accelerator pedal reserve, a measurement of an opening and a closing condition of a sunroof device and a power window, or the like. Further, the aforementioned structure can be applied to various fields.

According to the connecting structure for connecting the load measurement device and the load input portion of the present invention, the oscillating portion of the load measurement device can be oscillated in the longitudinal and in the width direction of the vehicle by constructing the universal joint by forming the convex surface at at least one of the outer surface of the shaft portion or the inner surface of the hole portion. Therefore, the moment is not transmitted to the oscillating portion even when the load input portion is applied with the moment around the axis extended in the longitudinal and in the width direction of the vehicle because of, for example, the sharp turn of the vehicle or the weight shift of the occupant. Thus, the accurate measurement of the load can be performed.

According to the connecting structure for connecting the load measurement device and the load input portion of the present invention, the bolt assembled to the oscillating portion or the load input portion is served as the shaft portion and the convex surface can be constructed by forming the swelled portion on a part of the bolt.

According to the connecting structure for connecting the load measurement device and the load input portion of the present invention, the bolt serving as the shaft portion is coupled with the oscillating portion or the load input portion and the convex portion is formed on the bolt in place of on the hole portion. Therefore, the convex portion can easily be manufactured and the manufacturing cost of the connecting structure for connecting the load measurement device and the load input portion can be reduced.

According to the connecting structure for connecting the load measurement device and the load input portion of the present invention, the shaft portion can be provided with the spring washer which applies the biasing force to the load input portion in a longitudinal direction of the shaft portion.

According to the connecting structure for connecting the load measurement device and the load input portion of the present invention, the fluctuation of clearance between the oscillating portion of the load measurement device and the load input portion is prevented and the gap between the oscillating portion of the load measurement device and the load input portion can be controlled by the biasing force of the spring washer. Thus, the shaking and the abnormal noise caused by the shaking can be reduced. Further, the spring washer is effective in keeping the load input portion in an appropriate position in a case of the sudden stop of the vehicle.

According to the connecting structure for connecting the load measurement device and the load input portion of the present invention, the oscillating portion is connected to the torsion bar. The oscillating portion and the torsion bar are arranged so that the convex surface of the bolt intersects with the hypothetical flat surface. The hypothetical flat surface includes the optimal position for receiving the load out of positions placed along a longitudinal direction of the torsion bar and being perpendicular to the torsion axis of the torsion bar.

According to the connecting structure for connecting the load measurement device and the load input portion of the present invention, the load applied from the load input portion to the load measurement device can appropriately be acted on the torsion bar. Thus, the ideal torsional displacement is generated in the torsion bar and the accurate measurement of the load can be performed.

## Claims

1. A connecting structure for connecting a load measurement device (100) and a load input portion (16), **characterized by** comprising:
an oscillating portion (50) provided at the load measurement device and oscillated upon receipt of a load from an object to be measured, the oscillating portion being applied with the load from the load input portion;
a hole portion (30) provided at one of the oscillating portion and the load input portion;
a shaft portion (20) provided at the other of the oscillating portion and the load input portion to be rotatably inserted into the hole portion; and
a convex surface (20a) formed on at least one of an outer surface of the shaft portion and
an inner surface (30a) of the hole portion to form a universal joint structure between the oscillating portion and the load input portion.

2. The connecting structure for connecting the load measurement device and the load input portion according to claim 1, wherein the convex surface is a spherical surface curved around a rotational axis of the shaft portion.

3. The connecting structure for connecting the load measurement device and the load input portion according to claims 1-2, wherein the shaft portion includes a bolt assembled to the oscillating portion or the load input portion and the bolt is provided with a swelled portion as the convex surface.

4. The connecting structure for connecting the load measurement device and the load input portion according to claims 1-3, further comprising a biasing means (18) provided at the shaft portion for applying a biasing force to the load input portion in a longitudinal direction of the shaft.

5. The connecting structure for connecting the load measurement device and the load input portion according to either one of claims 1-4, further comprising a torsion bar (52), wherein the oscillating portion is connected to the torsion bar and the oscillating portion and the torsion bar are arranged so that the convex surface of the shaft portion intersects with a hypothetical flat surface (M) including an optimal position (P) for receiving the load out of positions placed along a longitudinal direction of the torsion bar and being perpendicular to the torsion axis of the torsion bar.
